# EUROPEAN PATENT APPLICATION

(11) **EP 4 345 978 A1**
(43) Date of publication of application: **03.04.2024**
(21) Application number: 23196346.3
(22) Date of filing: 08.09.2023
(51) Int. Cl.: H01M 10/42, H01M 10/44, H01M 10/48, H01M 10/613, H01M 10/63, H01M 10/6563, H02J 7/00

(54) **BATTERY THERMAL MANAGEMENT SYSTEM AND BATTERY THERMAL MANAGEMENT CONTROL METHOD**

(30) Priority: 29.09.2022 CN 202211200399; 29.09.2022 CN 202222592781 U
(71) Applicant: Greenworks (Jiangsu) Co., Ltd., Changzhou, Jiangsu 213023 (CN)
(72) Inventor: LI, Baoan, Jiangsu, 213023 (CN); CHEN, Lei, Jiangsu, 213023 (CN); YAN, An, Jiangsu, 213023 (CN); XIE, Xuyan, Jiangsu, 213023 (CN); HUO, Xiaohui, Jiangsu, 213023 (CN)
(74) Representative: Bergenstråhle & Partners AB

(57) **Abstract**

The disclosure provides a battery pack, a battery thermal management system and a battery thermal management control method. The battery pack includes: a housing, a bracket and a battery cell. The housing is provided with an accommodation space. The bracket is arranged in the accommodation space, which forms at least one accommodation cavity with the accommodation space. The battery cell is arranged in the accommodation cavity, and at least one heat dissipation passage is opened in the accommodation cavity. At least one fan is arranged on one side of the heat dissipation passage to suck or blow air to the heat dissipation passage. Compared with the prior art, the battery pack of the disclosure has an active heat dissipation function while satisfying waterproofing.

## Description

### TECHNICAL FIELD

The disclosure belongs to a field of battery, and in particular relates to a battery pack, a battery thermal management system and a battery thermal management control method.

### BACKGROUND

High power and fast charging and discharging are the direction of battery development at present. In order to obtain higher power, it is necessary to connect several single battery modules in series to form a battery pack, which generates a high-voltage direct current through series connection. When the charge and discharge rate is higher, the temperature of the battery pack rises faster. However, temperature has a dual effect on the battery, specifically, as the temperature rises, the internal resistance of the battery decreases, thereby increasing the efficiency of the battery. However, higher temperatures accelerate the rate of harmful chemical reactions, causing permanent damage to the battery structure. Therefore, it is necessary to monitor and dissipate the temperature of the battery pack in real time.

At present, for high-power output battery packs, in order to ensure their discharge power, generally only the heat dissipation requirements are considered, and the waterproof requirements cannot be met at the same time, which limits the usage range of the battery packs to a certain extent.

In view of this, it is indeed necessary to improve the conventional battery packs to solve the above problems.

### SUMMARY

The disclosure provides a battery pack, which not only has a function of active heat dissipation, but also satisfies a requirement of waterproofing.

The disclosure provides a battery pack. The battery pack includes a housing, a bracket and a battery cell. The housing is provided with an accommodation space. The bracket is arranged in the accommodation space, which forms at least one accommodation cavity with the accommodation space. The battery cell is arranged in the accommodation cavity, and at least one heat dissipation passage is opened in the accommodation cavity. At least one fan is arranged on one side of the heat dissipation passage to suck air from the heat dissipation passage or blow air to the heat dissipation passage.

As a further improvement of the disclosure, the bracket is provided with a mounting part, the mounting part is provided with a through hole penetrating up and down, the battery cell is fixedly mounted on the mounting part, an electrical connector is provided on a first side of the mounting part away from the battery cell, and the electrical connector is electrically connected with the battery cell through the through hole.

As a further improvement of the disclosure, the battery pack further includes at least one battery cell set, the battery cell set is arranged in the accommodation cavity, and the battery cell set is formed by connecting the battery cells in series and/or in parallel through the electrical connector.

As a further improvement of the disclosure, the battery cell set comprises a battery cell string, and the battery cell string comprises a plurality of cells arranged in parallel and connected in parallel, and/or, the battery cell set comprises at least two battery cell strings, the at least two battery strings are arranged in parallel and connected in series, and each battery cell string comprises a plurality of battery cells arranged in parallel and connected in parallel.

As a further improvement of the disclosure, the heat dissipation passage is arranged adjacent to the battery cell set.

As a further improvement of the disclosure, a protruding wall is arranged on a second side of the mounting part facing the battery cell, and the battery cell is fixed in a mounting groove surrounded by the protruding wall, and adjacent battery cells are separated by the protruding wall, so that a heat dissipation gap is formed between the adjacent battery cells.

As a further improvement of the disclosure, the electrical connector comprises a fixed end and a free end protruding from the fixed end toward the battery cell, the fixed end is arranged on a first side of the bracket backing away from the battery cell, and the free end passes through the through hole and is electrically connected with the battery cell.

As a further improvement of the disclosure, the bracket extends away from the mounting part to form a first sealing structure, an inner wall of the housing is provided with a second sealing structure at a position corresponding to the first sealing structure, the first sealing structure is sealingly connected with the second sealing structure to form a sealing space, and the electrical connector is arranged in the sealing space.

As a further improvement of the disclosure, the bracket comprises a first bracket and a second bracket, at least two grooves are formed on the first bracket, the accommodation cavity is configured to be formed after the second bracket covers the groove, a first side of the first bracket facing the second bracket is provided with a third sealing structure, the second bracket is correspondingly provided with a fourth sealing structure, and the third sealing structure is sealingly connected with the fourth sealing structure to seal and wrap the battery cell in the accommodation cavity.

As a further improvement of the disclosure, a voltage of each battery cell is from 3.6V to 4.2V, and a voltage of the battery pack is from 54Vto 60V.

As a further improvement of the disclosure, the fan is arranged on both sides of the heat dissipation passage.

As a further improvement of the disclosure, a center of the heat dissipation passage lies in a same line as an axis of the fan, or one fan corresponds to a plurality of the heat dissipation passages.

As a further improvement of the disclosure, a width of the heat dissipation passage is greater than or equal to a width of the battery cell, or, the width of the heat dissipation passage is smaller than the width of the battery cell.

As a further improvement of the disclosure, the battery pack further includes at least one data collecting module, the data collecting module is a plate-shaped structure, arranged between the bracket and the housing, and perpendicular to the battery cell set and electrically connected with the battery cell.

As a further improvement of the disclosure, the battery pack further includes a PCB board, the PCB board is sealed inside an electric control box, and is electrically connected with the fan and the battery cell.

As a further improvement of the disclosure, the housing is provided with an air inlet and an air outlet corresponding to a position of the heat dissipation passage, and the fan is arranged at the air inlet and/or the air outlet and located between the housing and the bracket.

As a further improvement of the disclosure, an outside of the housing corresponds to the air inlet, and the air outlet is further provided with a filter, and the filter is configured to prevent foreign matter from entering the housing.

As a further improvement of the disclosure, the bracket is provided with at least one hole, the hole is provided with at least one temperature detection module, and thermal conductive glue is poured into the hole.

As a further improvement of the disclosure, the battery cell set is pluggably connected and arranged in the accommodation cavity.

The disclosure further provides a battery pack. The battery pack includes a housing, a bracket and a battery cell set. The housing is provided with an accommodation space. The bracket is arranged in the accommodation space and forming a plurality of accommodation cavities with the accommodation space. The battery cell set is arranged in the accommodation cavity, and a heat dissipation passage is arranged between the adjacent accommodation cavities. The housing is provided with an air inlet and an air outlet corresponding to the heat dissipation passage, at least one fan is provided at a position of the air inlet and/or the air outlet to suck air from the heat dissipation passage or blow air to the heat dissipation passage.

The disclosure further provides a battery thermal management system, which enables the battery pack to be charged and discharged within an allowable temperature range, and ensures a thermal balance among the battery cell sets as much as possible.

The disclosure further provides a battery thermal management system. The battery thermal management system includes at least one battery pack, a temperature detection module, a control unit and a heat dissipation module. The battery pack includes at least one battery cell set, and the battery cell set being provided with several battery cells. The temperature detection module is connected with the battery cell set to detect a temperature value of the battery cell set. The control unit is connected with the temperature detection module and the battery cell set respectively, receiving the temperature value, and generating a temperature control signal. The heat dissipation module is connected to the control unit, receives the temperature control signal to start heat dissipation. When the temperature value is higher than a first preset temperature value, the heat dissipation module starts heat dissipation, and the battery cell is charged or discharged. When the temperature value is higher than a second preset temperature value, the heat dissipation module starts heat dissipation, and the battery cell stops charging or discharging.

As a further improvement of the disclosure, when the temperature value is higher than a third preset temperature value and lower than the second preset temperature value, the heat dissipation module starts heat dissipation, and the battery cell is charged with reduced power.

As a further improvement of the disclosure, the battery pack is provided with a discharge port and a charging port connected with the battery cell set, the battery thermal management system further includes a charging control module, an input terminal of the charging control module are respectively connected with the charging port and the control unit, an output terminal of the charging control module is connected with a positive electrode of the battery cell set, and a control signal generated by the control unit turns on or off the charging control module.

As a further improvement of the disclosure, the battery thermal management system further includes a data collecting module, the data collecting module is respectively connected with the battery cell set and the control unit, detects a voltage value of the battery cell set, and sends it to the control unit to generate a control signal.

As a further improvement of the disclosure, the battery cell set comprises at least one battery cell string, and the battery cell string comprises the battery cell, wherein, the voltage value is a voltage value of the battery cell string, or a voltage value of each battery cell.

As a further improvement of the disclosure, the data collecting module is an analog front end, and the analog front end is a flexible board structure, vertically arranged on the battery cell set and electrically connected with it.

As a further improvement of the disclosure, the battery thermal management system further includes a shunt connected with a negative electrode of the battery cell set, an output terminal of the shunt is connected with the data collecting module to detect a charging current or a discharge current and convert it into a voltage signal and sent to the data collecting module.

As a further improvement of the disclosure, the battery thermal management system further includes a communication module, the battery pack is provided with a communication port, the communication port is connected with an electric tool or a charger, a first end of the communication module is connected with the communication port, and a second end of the communication module is connected with the control unit.

As a further improvement of the disclosure, the heat dissipation module is a fan arranged in the battery pack.

As a further improvement of the disclosure, the temperature detection module is a thermistor, the thermistor is arranged on a side of the battery cell set, and a number of the thermistors is the same as a number of the battery cell set or the battery cell.

As a further improvement of the disclosure, when the temperature value is lower than the first preset temperature value, the control unit controls the heat dissipation module to be turned off, and the battery cells are charged or discharged.

As a further improvement of the disclosure, when the temperature value is between the first preset temperature value and the second preset temperature, the control unit controls the heat dissipation module to start heat dissipation, and the battery cells are charged or discharged.

The disclosure further provides a battery thermal management control method, which enables the battery pack to be charged and discharged within the allowable temperature range, and ensures the thermal balance among the battery cell sets as much as possible.

The disclosure further provides a battery thermal management control method, including:
connecting a charger or an electric tool to communicate with a battery pack;
detecting a temperature value of a battery cell set of the battery pack;
comparing the temperature value with a first preset temperature value, wherein, if the temperature value being higher than the first preset temperature value, starting heat dissipation, and the battery cell being charged or discharged; and
when the temperature value being higher than a second preset temperature value, the battery cell stopping charging or discharging.

As a further improvement of the disclosure, the battery pack communicates with the charger through a communication module to perform a charging mode; and the battery pack communicates with the electric tool through the communication module to perform a discharging mode.

As a further improvement of the disclosure, in the charging mode, the first preset temperature value is between 40°C and 50°C; and in the discharging mode, the first preset temperature value is between 62°C and 72°C.

As a further improvement of the disclosure, in the charging mode, the second preset temperature value is between 45°C and 55°C; and in the discharging mode, the second preset temperature value is between 65°C and 77°C.

As a further improvement of the disclosure, in the charging mode, the temperature value is detected that it is higher than a third preset temperature value and lower than the second preset temperature value, the heat dissipation is started, the power is reduced to charge, and the third preset temperature value is between the first preset temperature value and the second preset temperature value.

As a further improvement of the disclosure, the third preset temperature value is between 43°C and 53°C, and the battery cell set in the battery pack is charged at a power reduced by 40% to 55%.

As a further improvement of the disclosure, detecting the temperature value of the battery cell set of the battery pack further comprises calculating a temperature coefficient compensation, the temperature coefficient compensation between the battery cell set at an edge of the battery pack and the battery cell set at a center of the battery pack is between 2°C and 10°C.

As a further improvement of the disclosure, a temperature detection module detects the temperature value, and a control unit receives the temperature value and generates a temperature control signal to control a heat dissipation module to start heat dissipation.

Beneficial effects of the disclosure are: the disclosure forms at least one accommodation cavity in the accommodation space between the bracket and the housing, and arranges the battery cell in the accommodation cavity to seal the battery cell in a circumferential direction. Through arranging the bracket in the accommodation space of the housing, the battery cell is sealed in an up and down direction, and finally the battery cell is completely sealed in the battery pack, so that the battery pack as a whole is waterproof. In addition, through arranging a heat dissipation passage in the accommodation cavity, at least one fan is arranged on one side of the heat dissipation passage to actively dissipate heat from the battery pack, so that the battery pack has the function of active heat dissipation while meeting waterproof requirements at the same time.

### BRIEF DESCRIPTION OF THE DRAWINGS

FIG. 1 is a schematic perspective view of a battery pack in an embodiment of the disclosure.
FIG. 2 is an exploded view of a structure of FIG. 1.
FIG. 3 is a cross- sectional view of FIG. 1.
FIG. 4 is a cross-sectional view from another angle of FIG. 1.
FIG. 5 is a schematic perspective view of the battery pack shown in FIG. 1 without a housing and a filter.
FIG. 6 is a schematic perspective view from a second angle in FIG. 5.
FIG. 7 is a schematic perspective view from a third angle in FIG. 5.
FIG. 8 is a schematic perspective view from a fourth angle in FIG. 5.
FIG. 9 is an exploded view of a structure of FIG. 5.
FIG. 10 is a schematic perspective view of an electrical connector in FIG. 9.
FIG. 11 is a schematic perspective view of a first bracket in FIG. 9.
FIG. 12 is a schematic perspective view from another angle of FIG. 11.
FIG. 13 is a schematic perspective view of a second bracket in FIG. 9.
FIG. 14 is a schematic perspective view from another angle of FIG. 13.
FIG. 15 is a schematic perspective view of a lower housing in FIG. 2.
FIG. 16 is a logic block view of a battery thermal management system of the disclosure.
FIG. 17 is a flow chart of the battery thermal management control method in a charging mode of the disclosure.
FIG. 18 is a flow chart of the battery thermal management control method in a discharging mode of the disclosure.

### PART NUMBER DESCRIPTION

100-battry pack;
10-housing, 101-upper housing, 102-lower housing, 11-accommodation space, 12-air inlet, 13-air outlet, 14-port part, 15-handle, 16-second sealing structure, 17-sealing space, 18-filter;
20-bracket, 21-first bracket, 211-groove, 212-third sealing structure, 213-first supporting component, 22-second bracket, 221-fourth sealing structure, 222-second supporting component, 23-accommodation cavity, 24-heat dissipation passage, 25-protruding ring, 26-mounting part, 261-through hole, 262-protruding wall, 263-mounting groove, 264-supporting part, 27-first sealing structure;
30-battery cell, 31-electrical connector, 311-fixed end, 312-free end, 313-electrical contact, 32-heat dissipation gap, 33-battery cell string, 34-battery cell set;
40-fan, 50-electric control box, 60-data collecting module, 70-temperature detection module.

### DETAILED DESCRIPTION

In order to enable an object, technical solution and advantages of the disclosure to be clearer, the disclosure will be described in detail below in conjunction with accompanying drawings and specific embodiments.

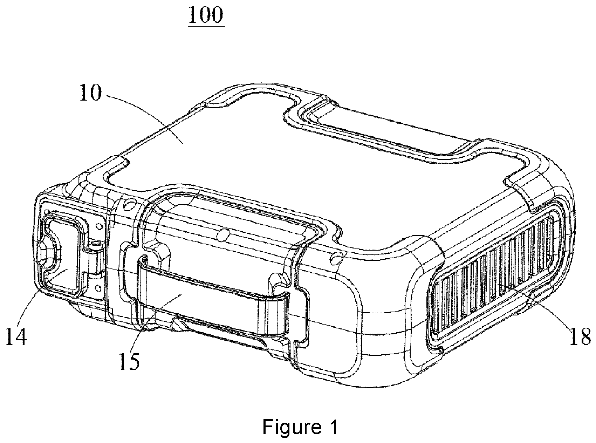

Please refer to FIG. 1 through FIG. 4. The disclosure provides a battery pack 100, used to supply power for a power tool. The power tool may be garden equipment or other non-garden equipment. The battery pack 100 includes a housing 10, a bracket 20 and a battery cell 30.

In this embodiment, the housing 10 is square and made of plastic material. The housing 10 is provided with a port part 14 and a handle 15. The port part 14 is used to connect with an external device (the power tool or external power source) to charge or discharge the battery cell 30 in the battery pack 100. The handle 15 is provided to facilitate an operator to take the battery pack 100 or remove the battery pack 100 from the power tool.

The housing 10 includes an upper housing 101 and a lower housing 102 which are fixedly connected. The upper housing 101 and the lower housing 102 enclose to form an accommodation space 11, and the bracket 20 is arranged in the accommodation space 11.

In an embodiment of the disclosure, the bracket 20 and the accommodation space 11 form at least one accommodation cavity 23, the battery cell 30 is arranged in the accommodation cavity 23, and at least one heat dissipation passage 24 is opened in the accommodation cavity 23. At least one fan 40 is arranged on one side of the heat dissipation passage 24 to suck or blow air to the heat dissipation passage 24. At least one accommodation cavity 23 is formed by the bracket 20 and the accommodation space 11 of the housing 10. The battery cell 30 is arranged in the accommodation cavity 23, so as to seal and wrap the battery cell 30 in the accommodation cavity 23 in a circumferential direction. Through arranging the bracket 20 in the accommodation space 11 of the housing 10, a sealing of the battery cell 30 in an up and down direction is realized. Finally, the battery cell 30 is completely sealed in the battery pack 100, so that the battery pack 100 is waterproof as a whole. In addition, through arranging the heat dissipation passage 24 in the accommodation cavity 23 and at least one fan 40 is arranged on one side of the heat dissipation passage 24 to actively dissipate heat from the battery pack 100, so that the battery pack 100 has a function of active heat dissipation while meeting waterproof requirements at the same time.

In another embodiment of the disclosure, the battery pack 100 includes the housing 10, the bracket 20 and a battery cell set 34. The housing 10 has the accommodation space 11, and the bracket 20 is arranged in the accommodation space 11 of the housing 10, forming several accommodation cavities 23 with the accommodation space 11. The battery cell set 34 is arranged in the accommodation cavity 23, and the heat dissipation passage 24 is arranged between adjacent accommodation cavities 23. The housing 10 is provided with an air inlet 12 and an air outlet 13 corresponding to the heat dissipation passage 24, and at least one fan 40 is arranged at a position of the air inlet 12 and/or the air outlet 13 to suck or blow air to the heat dissipation passage 24. Several accommodation cavities 23 are formed by the bracket 20 and the accommodation space 11 of the housing 10, and the battery cell set 34 is arranged in the accommodation cavity 23, so as to seal and wrap the battery cell set 34 in the accommodation cavity 23 in the circumferential direction. Through sealing the bracket 20 in the accommodation space 11 of the housing 10, a sealing of the battery cell set 34 in the up and down direction is realized. Finally, the battery cell set 34 is completely sealed in the battery pack 100, so that the battery pack 100 is waterproof as a whole. In addition, through arranging the heat dissipation passage 24 between adjacent accommodation cavities 23 and arranging the fan 40 at the air inlet 12 and/or the air outlet 13, the battery pack 100 is actively dissipated, so that the battery pack 100 meets the waterproof requirements. At the same time, it has the function of active heat dissipation.

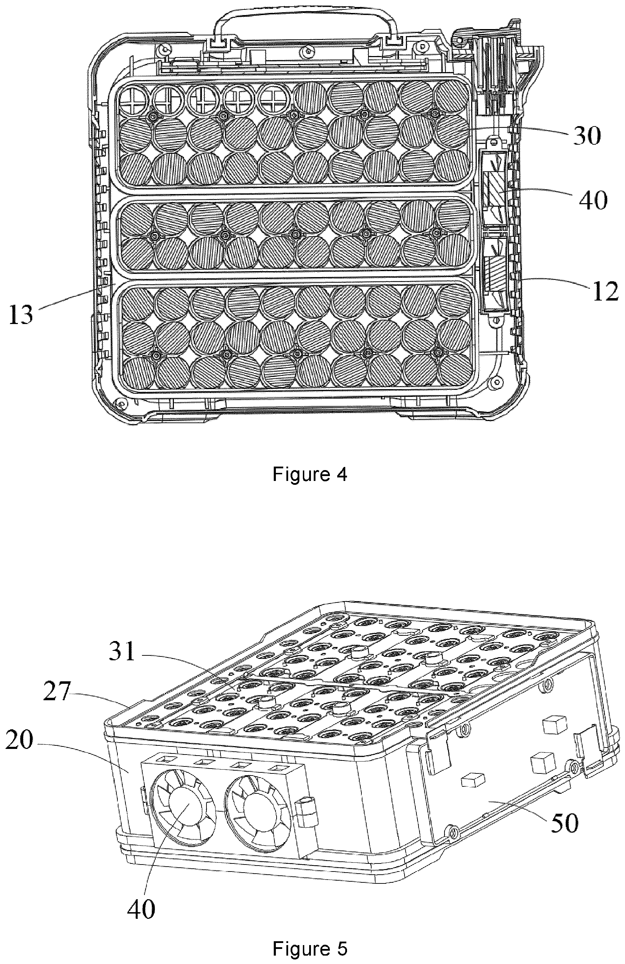

Please refer to FIG. 5 through FIG. 8. In the embodiment, the bracket 20 is provided with three accommodation cavities 23, and the heat dissipation passage 24 is arranged between adjacent accommodation cavities 23, which means that in this embodiment, there are two heat dissipation passages 24 between the three accommodation cavities 23. The fan 40 is arranged on one side of each heat dissipation passage 24, and a number of the fans 40 corresponds to a number of the heat dissipation passages 24, which means that each heat dissipation passage 24 corresponds to each fan 40. With such arrangement, fluidity of the airflow is improved and the heat dissipation of the battery pack 100 is improved. In other embodiments, fans 40 may also be arranged on both sides of each heat dissipation passage 24, which means that fans 40 are arranged at the air inlet 12 and the air outlet 13 of the housing 10, so as to enhance a rate of airflow in and out of the bracket 20 and improve a heat dissipation performance.

Further, a ratio of the number of the heat dissipation passages 24 to the fans 40 may be N:N, or N:(N-1), or N:1, wherein N is a positive integer. That is to say, one heat dissipation passage 24 may correspond to one fan 40 (which means that the fan 40 is located on one side of the heat dissipation passage 24). Alternatively, one heat dissipation passage 24 may correspond to two fans 40 (which means that both sides of the heat dissipation passage 24 are provided with fans 40). Alternatively, one fan may correspond to multiple heat dissipation passages. When one heat dissipation passage 24 may correspond to one fan 40, a center of the heat dissipation passage 24 lies in a same line as an axis of the fan 40, so as to improve the heat dissipation performance.

In order to further improve the heat dissipation performance, in this embodiment, a width of the heat dissipation passage 24 is set to be greater than or equal to a width of the battery cell 30. Of course, in other embodiments, the width of the heat dissipation passage 24 may also be smaller than the width of the battery cell 30. Alternatively, when there are multiple heat dissipation passages 24, some of the heat dissipation passages 24 have a width greater than or equal to the width of the battery cell 30, and some other heat dissipation passages 24 have a width smaller than the width of the battery cell 30, which is not limited by the disclosure.

A heat dissipation principle of the battery pack 100 of the disclosure is as follows: after an operation of the fan 40, external cold air may be drawn into the heat dissipation passage 24 of the bracket 20, and hot air in the accommodation cavity 23 of the bracket 20 will be released by guiding, thereby achieving an effect of reducing a temperature in the battery pack 100. That is, when the battery cell 30 is completely wrapped in the battery pack 100, the active heat dissipation of the fan 40 may be used to meet a heat dissipation of a high-power discharge of the battery pack 100 and a rapid recovery of a rechargeable temperature after discharge, which enables the battery pack 100 to have the function of the active heat dissipation while being waterproof and expands a usage range of the battery pack 100 and improves users' experience.

In some embodiments, the fan 40 is connected with the battery cell 30/ the battery cell set 34 which means that a power supply of the fan 40 is directly from the battery cell 30 or the battery cell set 34 in the accommodation cavity 23, so that the fan 40 may operate independently. The fan 40 may dissipate heat from the battery cells 30 or the battery cell set 34 regardless of whether the battery cells 30 or the battery cell set 34 in the battery pack 100 is in a storage, charging or discharging state.

Further, a filter 18 is arranged on an outside of the housing 10 corresponding to the positions of the air inlet 12 and the air outlet 13, and the filter 18 is configured to prevent foreign matter from entering the housing 10. In this embodiment, the filter 18 includes a plurality of vertical filter plates, and the adjacent filter plates are arranged alternately back and forth along a flow direction of airflow, so that a gap is formed between the adjacent filter plates for the airflow to pass through.

Please refer to FIG. 5 through FIG. 14. The bracket 20 is made of insulating material, preferably plastic material. The bracket 20 includes a first bracket 21 and a second bracket 22. The first bracket 21 and the accommodation space 11 form at least one groove 211, and the accommodation cavity 23 is formed after the second bracket 22 covers the groove 211. Each groove 211 is used for placing the battery cell 30 or the battery cell set 34. At least one heat dissipation passage 24 is opened in the groove 211. In this embodiment, the first bracket 21 is enclosed to from at least two grooves 211, and the accommodation cavity 23 is formed after the second bracket 22 covers the grooves 211. Each groove 211 is used to place the battery cell 30 or the battery cell set 34, and there is the heat dissipation passage 24 between adjacent grooves 211.

A side of the first bracket 21 facing the second bracket 22 is provided with a third sealing structure 212, and a position of the second bracket 22 corresponding to the third sealing structure 212 is provided with a fourth sealing structure 221. The third sealing structure 212 is sealed and connected with the fourth sealing structure 221 to seal and wrap the battery cell 30 in the accommodation cavity 23, which means that the battery cell 30 is wrapped in the accommodation cavity 23 of the bracket 20 along the circumferential direction (side surface) of the battery cell 30 to realize a circumferential sealing of the battery cell 30.

In this embodiment, the third sealing structure 212 is a sealing groove. Specifically, two protruding ribs are formed on a top end of the groove 211 of the first bracket 21 extending toward a direction of the second bracket 22, and the sealing groove is formed between the two protruding ribs. Correspondingly, the second bracket 22 extends toward a direction of the first bracket 21 to form a sealing rib. The sealing rib is inserted into the sealing groove to realize a sealing connection between the first bracket 21 and the second bracket 22, and then the battery cell 30 may be sealed and wrapped in the accommodation cavity 23 of the bracket 20 in the circumferential direction, which means that the battery cell 30 is sealed and wrapped in the accommodation cavity 23 from the side surface. It should be known that, in other embodiments, the third sealing structure 212 may also be a sealing rib extending from the first bracket 21 toward the second bracket 22. Correspondingly, the fourth sealing structure 221 may also be a sealing groove where the second bracket 22 extends toward the direction of the first bracket 21, which is not limited in the disclosure, as long as the sealing connection between the first bracket 21 and the second bracket 22 may be realized.

Further, in order to improve a sealing performance of the connection between the first bracket 21 and the second bracket 22, a sealing component (not shown) is arranged between the sealing rib and the sealing groove. The sealing component may be a sealing ring or a sealant. In some embodiments, the sealing component may be heat-dissipation silicone, which may assist the fan 40 to dissipate heat from the battery cell 30 accommodated in the accommodation cavity 23 of the bracket 20 while realizing the sealing connection between the first bracket 21 and the second bracket 22.

Further, in order to improve a structural strength of the bracket 20, the first bracket 21 is provided with a first supporting component 213 on a side facing the second bracket 22. A position of the second bracket 22 corresponding to the first bracket 213 is provided with a second supporting component 222, and the first bracket 21 and the second bracket 22 are fixedly connected with the second supporting component 222 through the first supporting component 213.

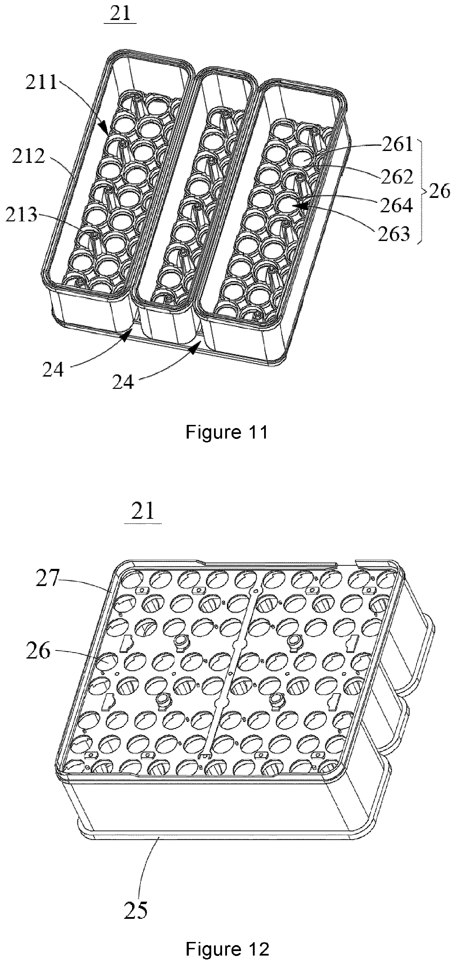

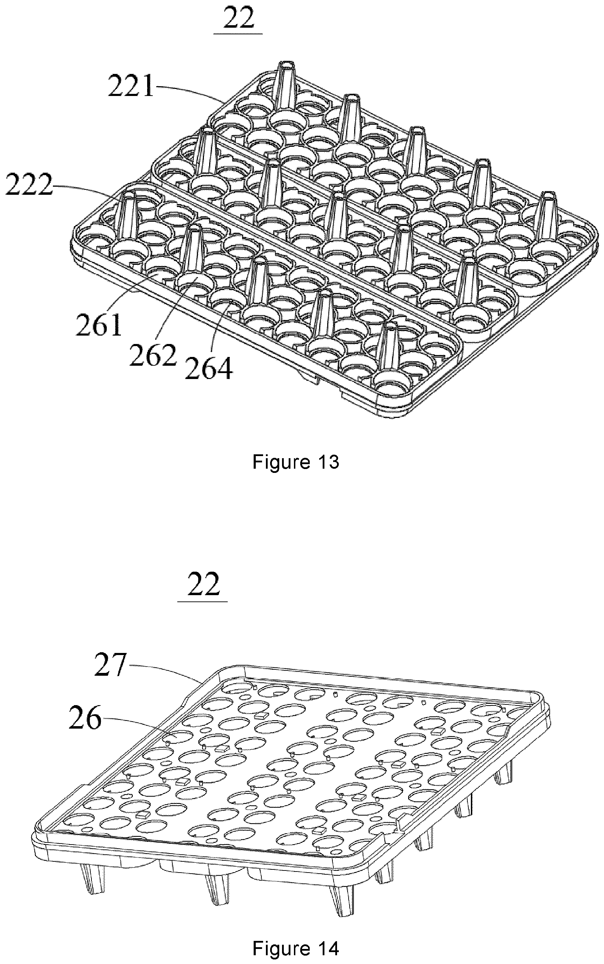

In some embodiments, the first supporting component 213 and the second supporting component 222 are arranged in the accommodation cavity 23 of the first bracket 21 and the second bracket 22, and are arranged on a gap between adjacent mounting parts 26 in the accommodation cavity 23 (see FIG. 11 and FIG. 13) to rationally utilize a space of the accommodation cavity 23.

Further, a protruding ring 25 is arranged on an outer wall of the first bracket 21 and the second bracket 22 facing the housing 10. The protruding ring 25 is arranged so that there is a gap between the first bracket 21 and an inner wall of the housing 10 and between the second bracket 22 and the inner wall of the housing 10, so that air may flow in the gap, which improves a heat dissipation effect of the battery pack 100.

Please refer to FIG. 5 through FIG. 14. A plurality of mounting parts 26 are arranged in the accommodation cavity 23 of the bracket 20. A shape of the mounting part 26 matches a shape of the battery cell 30, each mounting battery cell 26 is configured to accommodate one battery cell 30, and a plurality of battery cells 30 are detachably mounted on the mounting the 26 in an array.

The mounting part 26 is provided with a through hole 261 penetrating up and down, and the battery cell 30 is fixedly mounted on the mounting part 26. An electrical connector 31 is arranged on a side of the mounting part 26 away from the battery cell 30, and the electrical connector 31 is electrically connected with the battery cell 30 through the through hole 261, so as to connect the battery cells 30 in each accommodation cavity 23 or the battery cells 30 in adjacent accommodation cavities 23 in series and/or in parallel.

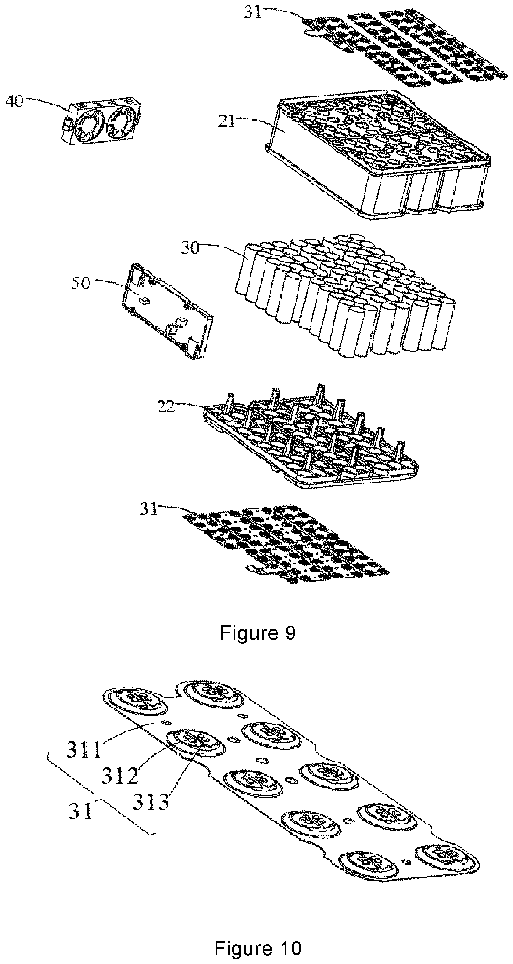

Specifically, please refer to FIG. 10. The electrical connector 31 is plate-shaped and includes a fixed end 311 and a free end 312 protruding from the fixed end 311 toward the battery cell 30. The free end 312 is provided with an electrical contact 313. The fixed end 311 is arranged on a side of the bracket 20 backing away from the battery cell 30, and the free end 312 passes through the through hole 261 so that the electrical contact 313 abuts with the battery cell 30 and/or the battery cell set 34, which realizes an electrical connection between the battery cell 30 and/or the battery cell set 34.

Further, in this embodiment, the battery pack 100 includes a plurality of electrical connectors 31. The battery cells 30 of the same row on each electrical connector 31 are connected in parallel, the battery cells 30 of adjacent rows are connected in series, and the adjacent electrical connectors 31 are connected in series. In this way, the battery cells 30 in the same accommodation cavity 23 may be connected in series and/or in parallel through the electrical connector 31. At the same time, the series connection and/or parallel connection of the battery cells 30 in different accommodation cavities 23 may also be realized through the electrical connector 31.

Please refer to FIG. 5 through FIG. 10. The battery cells 30 are connected in series and/or in parallel through electrical connectors 31 to form the battery cell set 34. The battery pack 100 includes at least one battery cell set 34, at least one battery cell set 34 is arranged in the accommodation cavity 23, and adjacent battery cell sets 34 are connected in series.

Further, each battery cell set 34 includes at least one battery cell string 33, and each battery cell string 33 includes a plurality of battery cells 30 arranged in parallel and connected in parallel.

It should be known that the battery pack 100 includes two electrodes with opposite electrical properties, which are positive electrodes and negative electrodes, to form a complete current circuit. One electrode is arranged in the sealing space 17 formed between the bracket 20 and the upper housing 101, and the other electrode is arranged in the sealing space 17 formed between the bracket 20 and the lower housing 102. In order to clearly illustrate a structure of the battery cell set 34 in each electrode, the following description takes the electrodes arranged in the sealing space 17 formed between the bracket 20 and the lower housing 102 as an example for illustration. A structure of the battery cell set 34 in the other electrode is the same as that, and will not be repeated here.

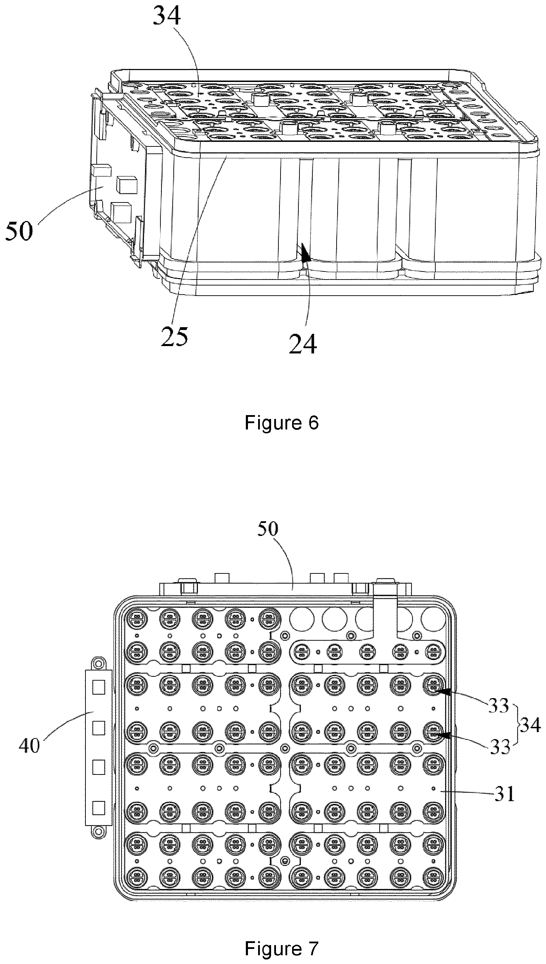

In this embodiment, each electrode includes 15 battery cell sets 34 (see FIG. 7). One battery cell set 34 includes one battery cell string 33, and the battery cell string 33 includes five battery cells 30 arranged in parallel and connected in parallel. The remaining 14 battery cell sets 34 include two battery cell strings 33 arranged in parallel and connected in series, and each battery cell string 33 includes five battery cells 30 arranged in parallel and connected in parallel. In some embodiments, a voltage of each battery cell is from 3.6V to 4.2V, and a voltage of the battery pack is from 54V to 60V.

Of course, in other embodiments, each electrode may also include other numbers of the battery cell sets 34, the battery cell set 34 includes one battery cell string 33, and the battery cell string 33 includes a plurality of battery cells 30 arranged in parallel and connected in parallel. Alternatively, the battery cell set 34 includes at least two battery cell strings 33, at least two battery cell strings 33 are arranged in parallel and connected in series, and each battery cell string 33 includes a plurality of battery cells 30 arranged in parallel and connected in parallel. That is to say, a number and arrangement of the battery cell set 34 in the battery pack 100 and a number of the battery strings 33 in the battery cell set 34 may be adjusted according to a voltage and current required by the power tool, which is not limited here. Such arrangement enables the battery pack 100 to have greater compatibility.

Further, the battery pack 100 further includes at least one data collecting module 60. The data collecting module 60 is a soft board structure, arranged in the sealing space 17 between the bracket 20 and the housing 10 and perpendicular to the battery pack 34 and electrically connected with the battery pack 34. The data collecting module 60 is configured to detect a voltage of the battery cell set 34, and/or detect a voltage of the battery cell string 33, and/or detect a voltage of each battery cell 30.

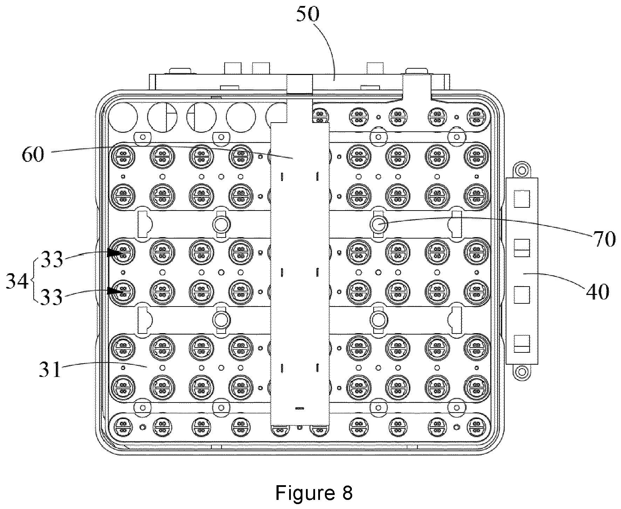

Please refer to FIG. 8. In this embodiment, there is one data collecting module 60, and the data collecting module 60 is in a shape of a soft board strip, and is arranged on a side of the bracket 20 away from the mounting part 26, which means that it is arranged in the sealing space 17 between the bracket 20 and the housing 10, located in a middle of the bracket 20, and vertically arranged and electrically connected with all the battery cell sets 34 to detect the voltages of the battery cell set 34 and the battery cell string 33. In other embodiments, the data collecting module 60 may also be the soft board structure covering the bracket 20, so as to be electrically connected with each battery cell 30, which may detect the voltage of each battery cell 30, and detect a faulty battery cell 30 through a voltage difference between two battery cells 30. Alternatively, there may be multiple data collecting modules 60, and the multiple data collecting modules 60 are tiled on the bracket 20 to be electrically connected with each battery cell 30, which is not limited in the disclosure.

Further, at least one hole (not shown) is opened on the bracket 20, and at least one temperature detection module 70 is arranged in the hole, and the temperature detection module 70 is poured into the hole through thermal conductive glue.

Specifically, the temperature detection module is composed of at least one temperature sensor, and the at least one temperature sensor is preferably a thermistor. Of course, it may also be other component, which is not limited here. In a preferred embodiment of the disclosure, the temperature detection module is formed by combining a plurality of temperature sensors NTC1 to NTCN. The plurality of temperature sensors are respectively connected with a control unit for detecting the temperature of the battery cell set 34 at each position in the battery pack 100, and sending a detected temperature value to the control unit for processing. In this embodiment, for a convenience of description, all the battery cell sets 34 in the battery pack 100 are divided into three groups. The three groups of battery cell sets 34 are arranged at intervals. The first group and the third group are arranged on both sides of the bracket 20, and the second group is located between the first group and the third group. The heat dissipation passage 24 is formed between the first group and the second group, and the heat dissipation passage 24 is further formed between the second group and the third group. Since the second group of battery cell sets 34 is located in a middle of the battery pack 100, when the battery pack 100 is normally charged and discharged, the second group of battery cell sets 34 tends to preferentially enter a temperature rise and is in a heat concentration area. Therefore, several more temperature sensors need to be mounted around the second group of battery cell sets 34 to monitor a temperature of the second group of battery cell sets 34 comprehensively.

That is to say, in a technical solution of the disclosure, the number of temperature sensors may be adaptively selected according to a heat distribution of the battery cell set 34 in the battery pack 100, so as to comprehensively monitor a temperature of all the battery cell sets 34 in the battery pack 100, so that the battery pack 100 may be charged and discharged within an allowable temperature range, and try to ensure a thermal balance among the battery cell sets 34.

In a technical solution of the disclosure, a temperature sensor is preferably arranged on a side of the battery cell set 34 and between two adjacent battery cell sets 34. When the temperature sensor is a thermistor, a hole will be opened at a corresponding position on the bracket 20 to put the thermistor in, and then heat-conducting glue is poured in to fix the thermistor. Certainly, the temperature sensor may also be arranged on the side of the battery cell set 34 and close to an edge of the bracket 20, and then the temperature sensor may also be used to detect the temperature of the battery cell set 34.

In the disclosure, the number of temperature sensors may be consistent with the number of battery cells 30, so as to monitor the temperature of each battery cell 30. It may also be consistent with a number of battery cell sets 34, so as to monitor a temperature of each battery cell set 34. The number of temperature sensors is not limited here.

Further, the battery cell 30/ battery cell string 33/ battery cell set 34 is pluggably connected and arranged in the accommodation cavity 23, so that when a problem is detected in the battery cell 30/ battery cell string 33/ battery cell set 34, the battery cell 30/ battery cell string 33/ battery cell set 34 may be replaced in time, which avoids replacing an entire battery pack and reducing maintenance costs.

Specifically, please refer to FIG. 11 through FIG. 14. A protruding wall 262 extends from the mounting part 26 towards one side of the battery cell 30. The protruding wall 262 is arranged around an outside of the through hole 261 to form a mounting part 263 on the bracket 20 for fixing the battery cell 30, and the battery cell 30 is fixedly arranged in the mounting part 263 surrounded by the protruding wall 262. In some embodiments, a shape of the mounting part 263 matches the battery cell 30. In this embodiment, the battery cell 30 is cylindrical, so the mounting part 263 is also circular, which means that the protruding wall 262 is a ring-shaped wall.

Further, a diameter of the protruding wall 262 is larger than a diameter of the through hole 261, so that there is a supporting part 264 for carrying the battery cell 30 between the protruding wall 262 and the through hole 261. The supporting part 264 provides a mounting base for the battery cell 30 to be fixedly arranged in the mounting part 263.

Further, the adjacent protruding walls 262 are tangent to each other and/or the protruding wall 262 is also tangent to an inner wall surface of the groove 211, so as to arrange more mounting grooves 263 in the accommodation cavity 23 and rationally utilize the space of the accommodation cavity 23, which increases the number of battery cells 30 accommodated in each cavity 23, and improves a compactness of the battery pack 100.

Further, the adjacent battery cells 30 are separated by the protruding wall 262, so that there is a heat dissipation gap 32 between the adjacent battery cells 30. When the fan 40 rotates, the airflow may flow in the heat dissipation gap 32 to improve the heat dissipation performance of the battery pack 100.

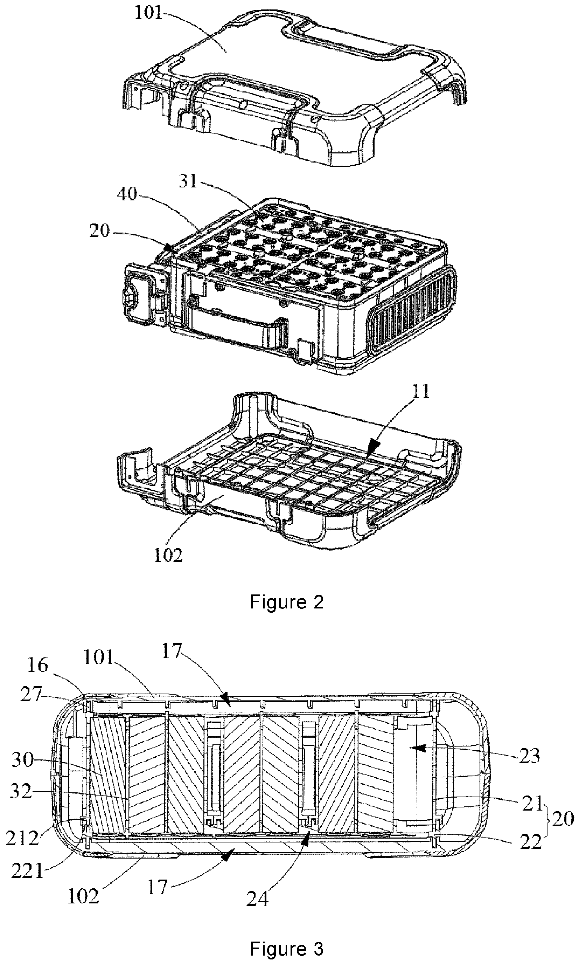

Please refer to FIG. 12, FIG. 14 and FIG. 15 combined with FIG. 3. The bracket 20 extends away from the mounting part 26 to form a first sealing structure 27. The inner wall of the housing 10 is provided with a second sealing structure 16 at a position corresponding to the first sealing structure 27. The first sealing structure 27 is sealed and connected with the second sealing structure 16 to form the sealing space 17, and the electrical connector 31 is arranged in the sealing space 17. Such arrangement realizes a sealing of the electrical connector 31 and a sealing of the battery cell 30 in the up and down direction, so that all battery circuits of the battery pack 100 are sealed and accommodated in the housing 10 of the battery pack 100, which improves the waterproof of the battery pack 100.

In this embodiment, the first sealing structure 27 is a sealing rib, and correspondingly, the second sealing structure 16 is a sealing groove. The sealing rib is inserted into the sealing groove to realize a sealing connection between the bracket 20 and the housing 10. It should be known that in other embodiments, the first sealing structure 27 may also be a sealing groove, and the second sealing structure 16 may be a sealing rib, which is not limited here, as long as the sealed connection between the bracket 20 and the housing 10 may be realized.

Further, in order to improve a sealing performance of the connection between the bracket 20 and the housing 10, a sealing component is arranged between the sealing rib and the sealing groove. The sealing member may be the sealing ring or the sealant.

Please refer to FIG. 5 through FIG. 8. The battery pack further includes a PCB board (not shown), the PCB board is sealed and arranged in an electric control box 50. Alternatively, the PCB board is sealed in the electric control box 50 in a form of glue filling and waterproof, so as to realize a waterproof performance of the electrical components of the whole battery pack 100 and improve the waterproof performance of the battery pack 100.

In some embodiments, the electric control box 50 is arranged in the accommodation space 11 of the housing 10 and at an adjacent side wall of the air inlet 12 and the air outlet 13 to facilitate an electrical connection with the fan 40, the battery cell 30/the battery cell set 34 and the data collecting module 60.

The above is a detailed description of a specific structure of the battery pack 100. Hereinafter, a temperature control and charge and discharge control of the battery pack 100 will be described in detail.

A large-capacity high-power battery pack 100 has a large number of battery cells 30 and is densely arranged, therefore, the temperature of each battery cell 30 will gradually rise during a high-power discharge. Especially, when the temperature of the battery cell 30 located in a middle area rises, it is easy to trigger a high-temperature protection in advance and a high-temperature recovery charging time is long. Therefore, the disclosure provides a temperature rise control system which can be applied to the large-capacity high-power battery pack 100 and a control method thereof, so that the temperature of each battery cell 30 can be balanced during a high-current charging and discharging of the battery pack 100, and the temperature rise of the whole battery pack 100 can be decreased, which improves an actual discharge capacity and greatly reduces high temperature charge recovery time.

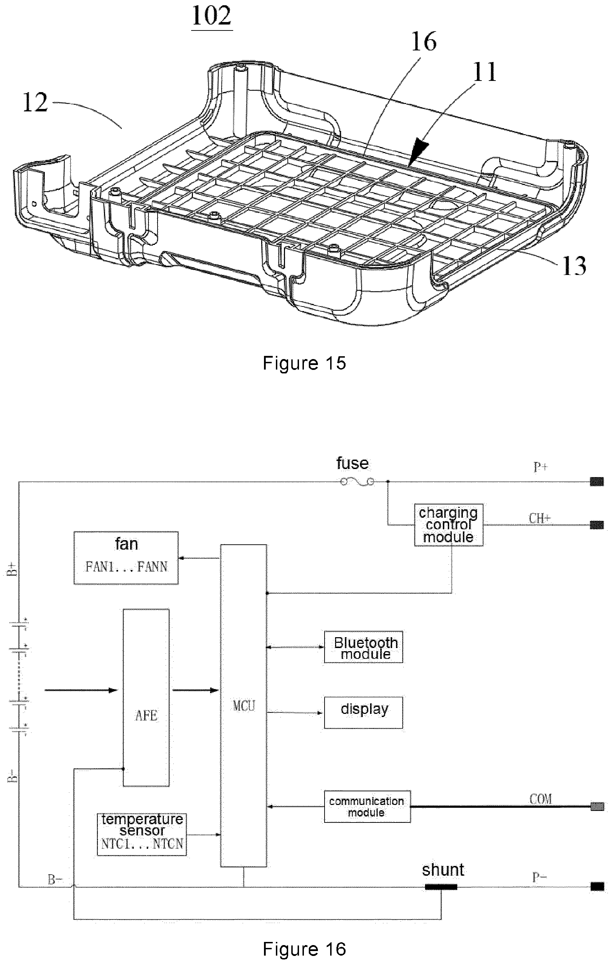

Please refer to FIG. 16. The disclosure provides a battery thermal management system use to control a temperature of the battery cell set 34 in the battery pack 100 mentioned above.

The battery thermal management system includes at least one battery pack 100 mentioned above. The battery pack 100 includes at least one battery cell set 34, the battery cell set 34 includes at least one battery cell string, and the battery cell string includes a plurality of battery cells 30. The battery thermal management system further includes the control unit, the temperature detection module, a heat dissipation module, a data collecting module 60, a charging control module, a Bluetooth module, a display, a communication module and a shunt. The control unit is used as a core component for controlling a normal operation of each module and then controlling the charging and discharging of the battery pack 100. For convenience of description, MCU is directly used instead of control unit. The control unit, the data collecting module 60, the charging control module, the Bluetooth module, the communication module and the shunt are all preferably integrated on the PCB board in the electric control box 50 to decrease an occupied volume in the battery pack 100.

The temperature detection module 70 is composed of at least one temperature sensor which is preferably the thermistor. Of course, the temperature sensor may also be other elements, which is not limited here. In an embodiment of the disclosure, the temperature detection module 70 is formed by a combination of a plurality of temperature sensors NTC1 to NTCN. The plurality of temperature sensors are connected with the battery cell set 34 for detecting temperature values of the battery cell set 34 at various positions in the battery pack 100. The MCU is respectively connected with the temperature detection module 70 and the battery cell set 34 for receiving the temperature value and generating a temperature control signal to control the heat dissipation module to start the heat dissipation. In this embodiment, for a convenience of description, all the battery cell sets 34 in the battery pack 100 are divided into three groups. The three groups of battery packs 34 are arranged at intervals. The first group and the third group are arranged on both sides of the bracket 20, and the second group is located between the first group and the third group. The heat dissipation passage 24 is formed between the first group and the second group, and the heat dissipation passage 24 is further formed between the second group and the third group. Since the second group of battery cell sets 34 is located in a middle of the battery pack 100, when the battery pack 100 is normally charged and discharged, the second group of battery cell sets 34 tends to preferentially enter a temperature rise and is in a heat concentration area. Therefore, several more temperature sensors need to be mounted around the second group of battery cell sets 34 to monitor a temperature of the second group of battery cell sets 34 comprehensively.

That is to say, in a technical solution of the disclosure, the number of temperature sensors may be adaptively selected according to the heat distribution of the battery cell set 34 in the battery pack 100, so as to comprehensively monitor the temperature of all the battery cell sets 34 in the battery pack 100, so that the battery pack 100 may be charged and discharged within the allowable temperature range, and try to ensure the thermal balance among the battery cell sets 34.

In a technical solution of the disclosure, the temperature sensor is preferably arranged on the side of the battery cell set 34 and between two adjacent battery cell sets 34. When the temperature sensor is the thermistor, the hole (not shown) will be opened at the corresponding position on the bracket 20 to put the thermistor in, and then heat-conducting glue is poured in to fix the thermistor. Certainly, the temperature sensor may also be arranged on the side of the battery cell set 34 and close to the edge of the bracket 20, and then the temperature sensor may also be used to detect the temperature of the battery cell set 34.

In the disclosure, the number of temperature sensors may be consistent with the number of battery cells 30, so as to monitor the temperature of each battery cell 30. It may also be consistent with the number of battery cell sets 34, so as to monitor the temperature of each battery cell set 34. The number of temperature sensors is not limited here.

The heat dissipation module is connected with the MCU, and is used for receiving the temperature control signal sent by the MCU and starting or shutting down according to the temperature control signal. In this embodiment, the heat dissipation module is formed by combining the above-mentioned multiple fans FAN1 to FANN arranged in the battery pack 100. The multiple fans 40 correspond to the heat dissipation passages 24, so as to dissipate the heat in the battery pack 100 through the heat dissipation passages 24 and realize a temperature balance among the battery cells 30 in each battery cell set 34 and a cooling of all the battery cell sets 34, which prolongs a duration life of the battery pack 100.

The data collecting module 60 electrically connects each battery cell set 34 with the MCU, which is used to detect a single battery cell voltage and a total voltage of each battery cell set 34 and transmit them to the MCU for processing to generate a control signal. In this embodiment, the data collecting module 60 is an analog front end (AFE), which is responsible for collecting a voltage of a single battery cell of each battery cell set 34, a voltage of a single battery cell string, a total voltage of each battery cell set 34, and a current of the charging and discharging circuit, and sending collected datas to the MCU for processing. Of course, in other embodiments, the data collecting module 60 may also be composed of other structures, which is not limited here.

As a preferred embodiment of the disclosure, at least one AFE is provided, and is vertically arranged on the battery cell set 34 in a flexible board structure and electrically connected with it to detect the voltage of each battery cell set 34. In this embodiment, there are eight battery cell sets 34, and they are divided into left and right columns, and each column is composed of four battery cell sets 34 arranged side by side. The AFE is in a form of a flexible board and extends in a long strip between two columns of battery cell sets 34. An extending direction of a strip-shaped flexible board is perpendicular to a direction in which the battery cell sets 34 are arranged, so that it can be ensured that the two long sides of the AFE may be electrically connected with the two columns of battery cell sets 34.

Of course, as a further extension of an embodiment of the disclosure, the AFE may also be electrically connected with each battery cell 30, in this way, it may be judged whether there is an abnormal battery cell according to a voltage difference between two battery cells 30, and then a location of the abnormal battery cell may be screened out, and the abnormal battery cell may be replaced.

The battery pack 100 is further provided with a discharge port and a charging port connected with the positive and negative electrodes of the battery cell set 34, and the discharge port is used for connecting with the electric tool to supply power for the electric tool. The charging port is used to connect with a charger to charge the battery pack. Specifically, in FIG. 16, the discharge port includes a first discharge port P+ connected with a positive electrode B+ of the battery cell set 34 and a second discharge port P- connected with a negative electrode B- of the battery cell set 34, and the charging port is CH+.

Input terminals of the charging control module are respectively connected with the charging port CH+ and the MCU. An output terminal of the charging control module is connected with the positive electrode B+ of the battery cell set 34, and the control signal generated by the MCU enables the charging control module to be turned on or off. Specifically, the charging control module is preferably a MOS switch. After a handshake between the battery pack 100 and the charger is completed through the communication module, the MCU generates a corresponding control signal based on data collected by the AFE, the MOS switch is controlled to turn on the charging circuit, and the battery pack 100 is enabled to start charging. When the battery pack 100 is fully charged, the single battery cell 30 is overheated, or a charging overcurrent occurs, the MCU controls the MOS switch to turn off the charging circuit to protect the battery pack 100.

There is also a fuse on a line connecting the positive electrode B+ of the battery cell set 34 and the first discharge port P+. The fuse is used to cut off a main positive circuit of the battery to protect the battery pack 100 when the charger or the electric tool fails due to a short circuit. In some embodiments, the charging control module is connected between an output terminal of the fuse and the charging port CH+, so that when the battery pack 100 is abnormal, the fuse may also be used to cut off the charging circuit to protect the charger.

The Bluetooth module is connected with the MCU, and can conduct two-way communication with the MCU, so as to send SOC, a temperature of the battery cell, battery charging status information, battery discharging status information, etc. to a client, and may also be uploaded to a cloud for storage, data analysis and retrospective. At the same time, a battery pack software may also be updated through the Bluetooth module to improve users' experience.

The display screen is also connected with the MCU as a man-machine interface for displaying information such as a remaining power of the battery pack SOC, a Bluetooth connection status and battery pack failure status, so that the user can know a working status of the battery pack 100 in time.

The battery pack 100 is further provided with a communication port COM. The communication port COM is used for connecting with the electric tool or the charger. One end of the communication module is connected with the communication port COM, and the other end is connected with the MCU, which is used to interactively identify information with the charger or the electric tool, the information includes such as a number of batteries in series and in parallel, a battery capacity, an allowable current value for charging and discharging and the temperature of the battery, which ensures that the battery pack 100 can work safely.

In a technical solution of the disclosure, a discharge switch is arranged on the electric tool. In a discharging mode, the MCU can conduct two-way communication with the electric tool through the communication module, and then transmit control signals of "normal discharge" and "stop discharge" mentioned below to the electric tool. The electric tool controls the opening or closing of the discharge switch, and then controls a discharge circuit to be turned on and off. Specifically, after a handshake between the battery pack 100 and the electric tool is completed through the communication module, the discharge circuit is turned on, so that the battery pack 100 starts to discharge. And when the battery pack 100 is insufficient in power, the single battery cell is overheated, or the discharge is over-current, etc., the discharge circuit is turned off to protect the battery pack 100.

The shunt is connected between the negative electrode B- of the battery cell set 34 and the second discharge port P-. An output terminal of the shunt is also connected with the AFE for detecting the charging current or discharging current, and converting it into a voltage signal and sending it to the AFE for calculation, so as to monitor a current value of the charging circuit and the discharging circuit. In some embodiments, the shunt is a resistor, and the current value flowing through the resistor may be from 1.8A to 2.0A, which should not be limited thereto.

**A** working principle of the battery thermal management system will be explained as follows:

In a charging mode: the temperature detection module 70 is used to detect the temperature values at multiple positions in the battery cell set 34 and send them to the MCU for processing. The MCU will simultaneously send the detected temperature values to the charger, and the charger will judge whether the charging is normal. Specifically, when the temperature value detected by the temperature detection module 70 is lower than a first preset temperature value, the MCU controls the fan 40 to turn off, and the charger charges the battery pack 100 normally at this time. When the temperature detected by the temperature detection module 70 is higher than the first preset temperature value but not more than a second preset temperature value, the MCU controls the fan 40 to start the heat dissipation, and the charger charges the battery pack 100 normally. When the temperature value detected by the temperature detection module 70 is higher than a third preset temperature value but not more than the second preset temperature value, the MCU controls the fan 40 to start the heat dissipation, and the charger performs a reduced current charging on the battery pack 100 at the same time. When the temperature detected by the temperature detection module 70 is higher than the second preset temperature, the MCU controls the fan 40 to start the heat dissipation, and the charger stops charging the battery pack 100 at the same time.

In the discharging mode: the temperature detection module 70 is used to detect the temperature values at multiple positions in the battery cell set 34 and send them to the MCU for processing. The MCU will simultaneously send the detected temperature values to the electric tool, and the electric tool will control the discharge switch to be turned on or off. Specifically, when the temperature value detected by the temperature detection module 70 is lower than a first preset temperature value, the MCU controls the fan 40 to turn off, at this time, the discharge switch is turned on, and the battery pack 100 is normally discharged. When the temperature detected by the temperature detection module 70 is higher than the first preset temperature value but not more than a second preset temperature value, the MCU controls the fan 40 to start the heat dissipation, at this time, the discharge switch is turned on, and the battery pack 100 is normally discharged. When the temperature value detected by the temperature detection module 70 is higher than a third preset temperature value but not more than the second preset temperature value, the MCU controls the fan 40 to start the heat dissipation, at this time, the electric tool controls the discharge switch to be turned off, the battery pack 100 stops discharging, and the electric tool stops working.

The disclosure further provides a battery thermal management control method, which includes:
connecting the charger or the electric tool to communicate with the battery pack 100;
detecting the temperature value of the battery cell set 34 of the battery pack 100 and transmitting it to the control unit MCU;
comparing the temperature value with the first preset temperature value, if the temperature value being higher than the first preset temperature value, starting heat dissipation, and the battery cell being charged or discharged; and
when the temperature value being higher than the second preset temperature value, the battery cell 30 stopping charging or discharging.

The battery pack 100 communicates with the charger through the communication module to perform the charging mode, and the battery pack 100 communicates with the electric tool through the communication module to perform the discharging mode.

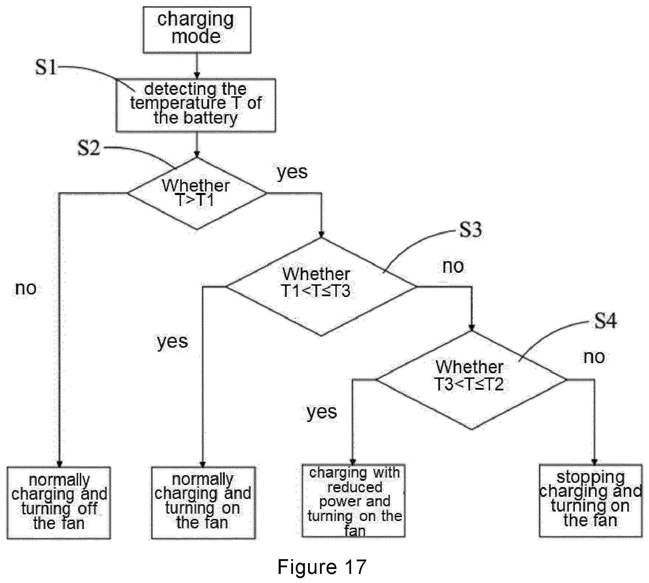

**Please** refer to FIG. 17. In the charging mode, operations of the battery thermal management control method may be briefly summarized as follows:
**S1:** detecting the temperature T of the battery;
S2: the MCU judging whether the temperature T is greater than the first preset temperature T1, if so, entering S3, if not, the battery pack 100 being charged normally, and the fan 40 being not turned on;
**S3:** further judging whether the temperature T is greater than the first preset temperature T1 and less than or equal to the third preset temperature T3, if yes, the battery pack 100 being charged normally, and the fan 40 being turned on, if not, then entering S4;
S4: further judging whether the temperature T is greater than the third preset temperature T3 and less than or equal to the second preset temperature T2. If yes, the battery pack 100 being charged with reduced power and the fan 40 being turned on, if not, the battery pack 100 being stopped charging and the fan 40 being turned on.

That is to say, in the charging mode, a relationship between the temperature T of the battery and the third preset temperature T3 will be further judged. If the detected temperature T is higher than the third preset temperature T3 but not higher than the second preset temperature T2, the control unit MCU controls the fan 40 to be turned on, and the battery cell set 34 in the battery pack 100 reduces power for charging. The first preset temperature T1, the second preset temperature T2 and the third preset temperature T3 meet the following requirements: T1<T3<T2.

It should be noted that: 1. in the charging mode, the first preset temperature T1 is a temperature threshold at which the fan 40 is turned on, usually between 40°C and 50°C, and is 50°C in some embodiments. The third preset temperature T3 is a temperature threshold when charging with reduced power, usually between 43°C and 53°C, and is 53°C in some embodiments. The second preset temperature T2 is an upper limit threshold of a battery cell charging protection, usually between 45°C and 55°C, and is 55°C in some embodiments. 2. In S4, when the temperature T is greater than the third preset temperature T3 and less than or equal to the second preset temperature T2, the battery cell set 34 in the battery pack 100 is charged at a power reduced by 40% to 55%.

From the above control method, it can be seen that after entering the charging mode, the battery thermal management system will detect the temperature at multiple locations of the battery cell set 34 in real time. The fan 40 in the battery pack 100 is controlled to be turned on and off according to the temperature thresholds T1, T2, T3, so as to ensure the temperature balance of each battery cell 30 and satisfy a fast charging of the battery pack 100.

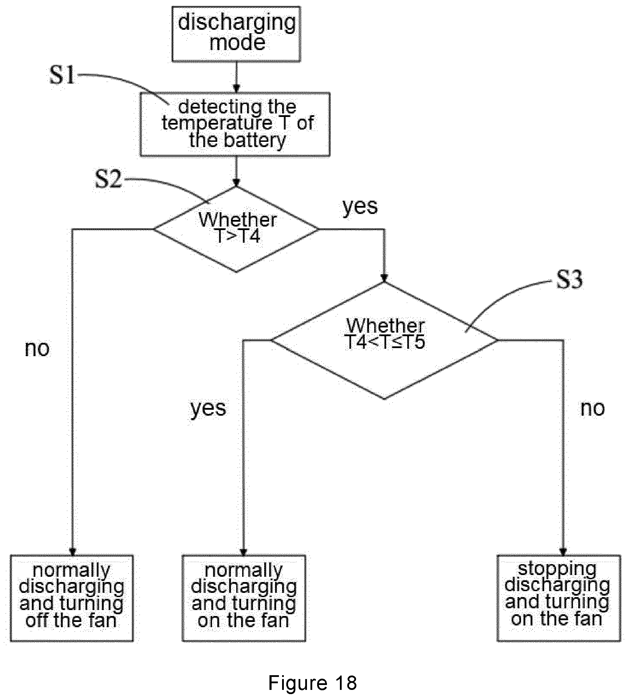

Please refer to FIG. 18. In the discharging mode, operations of the battery thermal management control method may be briefly summarized as follows:
S1: detecting the temperature T of the battery;
S2: the MCU judging whether the temperature T is greater than a first preset temperature T4, if so, entering S3, if not, the battery pack 100 being discharged normally, and the fan 40 being not turned on;
**S3:** further judging whether the temperature T is greater than the first preset temperature T4 and less than or equal to a second preset temperature T5, if yes, the battery pack 100 being discharged normally, and the fan 40 being turned on, if not, the battery pack 100 stopping being discharged, and the fan 40 being turned on.

It should be noted that: in the discharging mode, the first preset temperature T4 is a temperature threshold at which the fan 40 is turned on, usually between 62°C and 72°C, and is 72°C in some embodiments. The second preset temperature T5 is an upper threshold value of a battery cell discharge protection, usually between 65°C and 77°C, and is 75°C in some embodiments.

From the above control method, it can be seen that after entering the discharging mode, the battery thermal management system will detect the temperature of each part of the battery cell set 34 in real time. The fan 40 in the battery pack 100 is controlled to be turned on and off according to the temperature thresholds T4 and T5, so as to ensure the temperature balance of each battery cell 30 and satisfy a high power discharge of the battery pack 100.

The above ordering of S1 to S4 is only for a convenience of understanding and explaining the technical solution of the disclosure, and does not mean that the order of the above operations is limited. Those skilled in the art may reduce or replace some of the operations according to the actual situation, as long as they do not deviate from an essence of the disclosure, they can be reasonably considered to belong to a protection scope of the disclosure.

In the charging mode and the discharging mode, the temperature detection module 70 in the above S1 to S4 is all arranged in a central of the battery pack 100. However, when the temperature detection module 70 is arranged at an edge of the battery pack 100, the temperature at the center of the battery pack 100 is 2°C to 10°C higher than the temperature at the edge of the battery pack 100, which means that when judging the temperature value, it is necessary to add 2°C to 10°C to the temperature value detected by the temperature detection module 70, so as to roughly judge a temperature value of a heat concentration area of the battery pack, and then judge whether it is necessary to turn on the fan 40. That is to say, the operations of detecting the temperature value of the battery cell set 34 of the battery pack 100 also includes calculating a temperature coefficient compensation. The temperature coefficient compensation between the battery cell set 34 at the edge of the battery pack 100 and the battery cell set 34 at the center of the battery pack 100 is from 2°C to 10°C.

In order to further illustrate a feasibility and effectiveness of the battery thermal management control method of the disclosure, a comparative test was conducted on a technical solution of the disclosure, and the test results are shown in Table 1 below.

**Table 1**

| | | | | |
|---|---|---|---|---|
| Discharge recovery charging time 1 | Discharge current | Discharge capacity | Status | Recovery to 46°C |
| | 80A | 18.008 | Sealed housing | / |
| | | 17.968 | With holes on both sides and no fan | 109min9s |
| | | 17.891 | With a fan on one side | 44m in6s |
| | | 17.999 | With fans on both sides | 32min39s |
| Discharge recovery charging time 2(with a thinned fan) | Discharge current | Discharge capacity | Status | Recovery to 46°C |
| | 80A | 17.632 | With fans on both sides | 38min48s |
| | | 17.747 | With a fan on one side | 50min18s |

It can be seen from Table 1 that: on a basis of the same discharge current, in a technical solution without fan, a time required for the battery pack 100 to cool from an initial temperature of 75°C to 46°C is about 110min. In a technical solution with a fan on one side, the time required for the battery pack 100 to cool from the initial temperature of 75°C to 46°C is about 45min to 51min. In a technical solution with fans on both sides, the time required for the battery pack 100 to cool from the initial temperature of 75°C to 46°C is about 32min to 39min, which may be summarized as shown in Table 2 below.

**Table 2**

| | | | |
|---|---|---|---|
| Battery pack cooling | Cooling condition | Cooling status | Cooling time |
| | 75°C recovery to 46°C | Without fan | 111m in |
| | | With fans | 32m in |

It can be seen from Table 2 that: when cooling the battery pack 100 from the initial temperature of 75°C to 46°C, a technical solution with a fan of the disclosure can shorten the cooling time of the temperature of the battery by 71%, which greatly shortens a time from high temperature discharge to rechargeable.

In summary, the battery pack 100 of the disclosure forms at least one accommodation cavity 23 in the accommodation space 11 of the bracket 20 and the housing 10, and arranges the battery cells 30/ battery cell set 34 in the accommodation cavity 23 to seal the battery cell 30/battery cell set 34 in the circumferential direction. Through sealing the bracket 20 in the accommodation space 11 of the housing 10, the sealing of the battery cell 30/battery cell set 34 in the up and down direction and the sealing of the electrical connector 31 in the sealing space 17 between the bracket 20 and the housing 10 are realized. Finally, the battery circuit of the battery pack 100 is completely sealed in the housing 10, so that the battery pack 100 is waterproof as a whole. At the same time, through arranging the heat dissipation passage 24 in the accommodation cavity 23, and at least one fan 40 is provided on one side of the heat dissipation passage 24 to actively dissipate heat from the battery pack 100. It can not only satisfy the heat dissipation of the battery pack 100 in high-power discharge, but also quickly return to the rechargeable temperature after discharge, so that the battery pack 100 may meet the waterproof requirement and have a function of the active heat dissipation, which expands the usage range of the battery pack 100 and improves the users' experience.

In addition, the battery thermal management system and the battery thermal management control method of the disclosure use the temperature detection module 70 to detect the temperature at each position of the battery cell set 34 in the battery pack 100, and in combination with the fan 40 , the battery pack 100 is charged and discharged within the allowable temperature range, and the thermal balance among the battery cell sets 34 is ensured as much as possible, thereby prolonging the duration life of the battery pack 100 .

The above embodiments are only used to illustrate technical solutions of the disclosure and not to limit them. Although the disclosure has been described in detail with reference to the preferred embodiments, those of ordinary skill in the art should understand that the technical solutions of the disclosure may be modified or equivalently replaced, without departing from scope of the technical solutions of the disclosure.

## Claims

1. A battery thermal management system, comprising:
at least one battery pack, comprising at least one battery cell set, and the battery cell set being provided with several battery cells;
a temperature detection module, connected with the battery cell set to detect a temperature value of the battery cell set;
a control unit, connected with the temperature detection module and the battery cell set respectively, receiving the temperature value, and generating a temperature control signal; and
a heat dissipation module, connected to the control unit, receives the temperature control signal to heat dissipation; wherein
when the temperature value is higher than a first preset temperature value, the heat dissipation module starts heat dissipation, and the battery cell is charged or discharged; and
when the temperature value is higher than a second preset temperature value, the heat dissipation module starts heat dissipation, and the battery cell stops charging or discharging.

2. The battery thermal management system according to claim 1, wherein
when the temperature value is higher than a third preset temperature value and lower than the second preset temperature value, the heat dissipation module starts heat dissipation, and the battery cell is charged with reduced power.

3. The battery thermal management system according to claim 1, further comprising a charging control module, wherein
the battery pack is provided with a discharge port and a charging port connected with the battery cell set, an input terminal of the charging control module are respectively connected with the charging port and the control unit, an output terminal of the charging control module is connected with a positive electrode of the battery cell set, and a control signal generated by the control unit turns on or off the charging control module.

4. The battery thermal management system according to claim 3, further comprising a data collecting module, wherein
the data collecting module is respectively connected with the battery cell set and the control unit, detects a voltage value of the battery cell set, and sends the voltage value to the control unit to generate a control signal;
the battery cell set comprises at least one battery cell string, and the battery cell string comprises the battery cell, wherein, the voltage value is a voltage value of the battery cell string, or a voltage value of each battery cell.

5. The battery thermal management system according to claim 4, wherein
the data collecting module is an analog front end, and the analog front end is a flexible board structure, vertically arranged on the battery cell set and electrically connected with the battery cell set.

6. The battery thermal management system according to claim 4, further comprising a shunt connected with a negative electrode of the battery cell set, wherein
an output terminal of the shunt is connected with the data collecting module to detect a charging current or a discharge current which is converted into a voltage signal and sent the voltage signal to the data collecting module.

7. The battery thermal management system according to claim 1, further comprising a communication module, wherein
the battery pack is provided with a communication port, the communication port is connected with an electric tool or a charger, a first end of the communication module is connected with the communication port, and a second end of the communication module is connected with the control unit.

8. The battery thermal management system according to claim 1, wherein
the heat dissipation module is a fan arranged in the battery pack.

9. The battery thermal management system according to claim 1, wherein
the temperature detection module is a thermistor, the thermistor is arranged on a side of the battery cell set, and a number of the thermistors is the same as a number of the battery cell set or the battery cell.

10. The battery thermal management system according to claim 1, wherein
when the temperature value is lower than the first preset temperature value, the control unit controls the heat dissipation module to be turned off, and the battery cells are charged or discharged; or
when the temperature value is between the first preset temperature value and the second preset temperature, the control unit controls the heat dissipation module to start heat dissipation, and the battery cells are charged or discharged.

11. A battery thermal management control method, comprising:
connecting a charger or an electric tool to communicate with a battery pack;
detecting a temperature value of a battery cell set of the battery pack;
comparing the temperature value with a first preset temperature value, wherein, if the temperature value being higher than the first preset temperature value, starting heat dissipation, and the battery cell being charged or discharged; and
when the temperature value being higher than a second preset temperature value, the battery cell stopping charging or discharging; wherein
the battery pack communicates with the charger through a communication module to perform a charging mode,
the battery pack communicates with the electric tool through the communication module to perform a discharging mode, and
a temperature detection module detects the temperature value, and the control unit receives the temperature value and generates a temperature control signal to control a heat dissipation module to start heat dissipation;

12. The battery thermal management control method according to claim 11, wherein
in the charging mode, the first preset temperature value is between 40°C and 50°C, the second preset temperature value is between 45°C and 55°C; and
in the discharging mode, the first preset temperature value is between 62°C and 72°C, the second preset temperature value is between 65°C and 77°C.

13. The battery thermal management control method according to claim 11, wherein
in the charging mode, detecting that the temperature value is higher than a third preset temperature value and lower than the second preset temperature value, the heat dissipation is started, the power is reduced to charge, and the third preset temperature value is between the first preset temperature value and the second preset temperature value.

14. The battery thermal management control method according to claim 13, wherein
the third preset temperature value is between 43°C and 53°C, and the battery cell set in the battery pack is charged at a power reduced by 40% to 55%.

15. The battery thermal management control method according to claim 11, wherein
detecting the temperature value of the battery cell set of the battery pack further comprises calculating a temperature coefficient compensation, the temperature coefficient compensation between the battery cell set at an edge of the battery pack and the battery cell set at a center of the battery pack is between 2°C and 10°C.
